Europäisches Patentamt

European Patent Office

Office européen des brevets

(19)

(11) Publication number: 0 281 721
A1

# (12) EUROPEAN PATENT APPLICATION

(21) Application number: 87850070.1

(22) Date of filing: 09.03.87

(51) Int. Cl.⁴: **B60B 33/00** , B62B 5/00

(43) Date of publication of application:
14.09.88 Bulletin 88/37

(84) Designated Contracting States:
AT BE CH DE ES FR GB GR IT LI LU NL SE

(71) Applicant: MTD-PRODUKTER I SMALAND AB
Box 195
S-572 01 Oskarshamn(SE)

(72) Inventor: Nilsson, Lars Agne Harry
Troliebergsvägen 3
S-572 00 Oskarshamn(SE)

(74) Representative: Asketorp, Göran P.
Asketorp Patent & Juridik AB V.
Rönneholmsvägen 62
S-217 41 Malmö(SE)

(54) Wheel assembly.

(57) A wheel assembly comprising a plate having three arms (2, 3, 4) each comprising a swivel caster (5, 6) and a depending arm (8) comprising a ball and socket joint (10, 25) for connection to a vehicle to be movable. The ball and socket joint is positioned approximately in the centrum of the area encircled by the attachment points of the casters and at about the same height over the ground as the horizontal pivot axis of each caster. Preferably each arm is reinforced (11, 12) in order that the vertical axis of the caster will always be vertical to avoid any wobbling of the casters.

EP 0 281 721 A1

Fig 3

## WHEEL ASSEMBLY

### FIELD OF INVENTION

The present invention relates to a wheel assembly having improved ability to pass threshold and similar obstacles. The wheel assembly can be used at any device to be movable but is specifically intended to be used at indoor vehicles such as trolleys, stands, beds and especially in a hospital environment.

The wheel assembly comprises a dolly having swivel casters attached thereof and is attached to the vehicle by a ball and socket joint to have fridom to rotate in all directions at least to a limited extent.

### PRIOR ART

There are previously known dollys having swivel casters. The United States Patents Nos. 2 314 129, 4 178 006 and 4 210 341 disclose such devices.

US-2 314 129 discloses a dolly having three arms, at the ends of which are attached swivel casters. The dolly is insertable below an item to be moved, such as a stove, a piano, a refrigerator etc. However, the dolly is not pivotable in relation to the item to be moved.

In US-4 178 006 it is recognized that a problem exists in passing thresholds and similar obstacles. Thus, an upraised caster is located in the running direction and should an obstacle be encountered, the upraised caster passes thereover and then acts as a brace while the remainder of the dolly is urged thereover.

### SUMMARY OF THE INVENTION

The object of the present invention is to provide a wheel assembly having a much greater ability to pass over obstacles compared to previously known devices.

Another object of the invention is to provide a wheel assembly which by itself avoids small obstacles by encircling such obstacles.

Thus, there is provided according to the invention a wheel assembly comprising a plate having several swivel casters attached thereto and being attached to a vehicle to be movable. The wheel assembly is attached to the vehicle by a ball and socket joint to have fridom to rotate and pivot in all directions at least at a limited extent.

Preferably, the plate has several arms, e. g. three arms, each comprising a swivel caster at the end thereof. The ball and socket joint is attached to a depending arm of the plat. The plate is so stiff or reinforced that the axes of the swivel casters always are vertical. The ball and socket joint is positioned approximately in the centrum of the area encircled by the attachment points of the casters and at about the same height over the ground as the horizontal pivot axis of each caster.

### SHORT DESCRIPTION OF THE DRAWINGS

The invention is described more in details below by reference to the appended drawings showing a preferred embodiment of the invention.

Fig. 1 is a plan view of the wheel assembly according to the preferred embodiment of the invention, having one swivel caster removed.

Fig. 2 is a cross-sectional view according to line A - A in Fig. 1.

Fig. 3 is a cross-sectional view of a trolley partially in cross-section

Fig. 4 is a side view showing the use of the wheel assembly at a trolley.

Fig. 5 is a perspective view showing another use of the wheel assembly at a stand.

Fig. 6 is a side view of the stand according to Fig. 5 in another position.

### DETAILED DESCRIPTION OF A PREFERRED EMBODIMENT

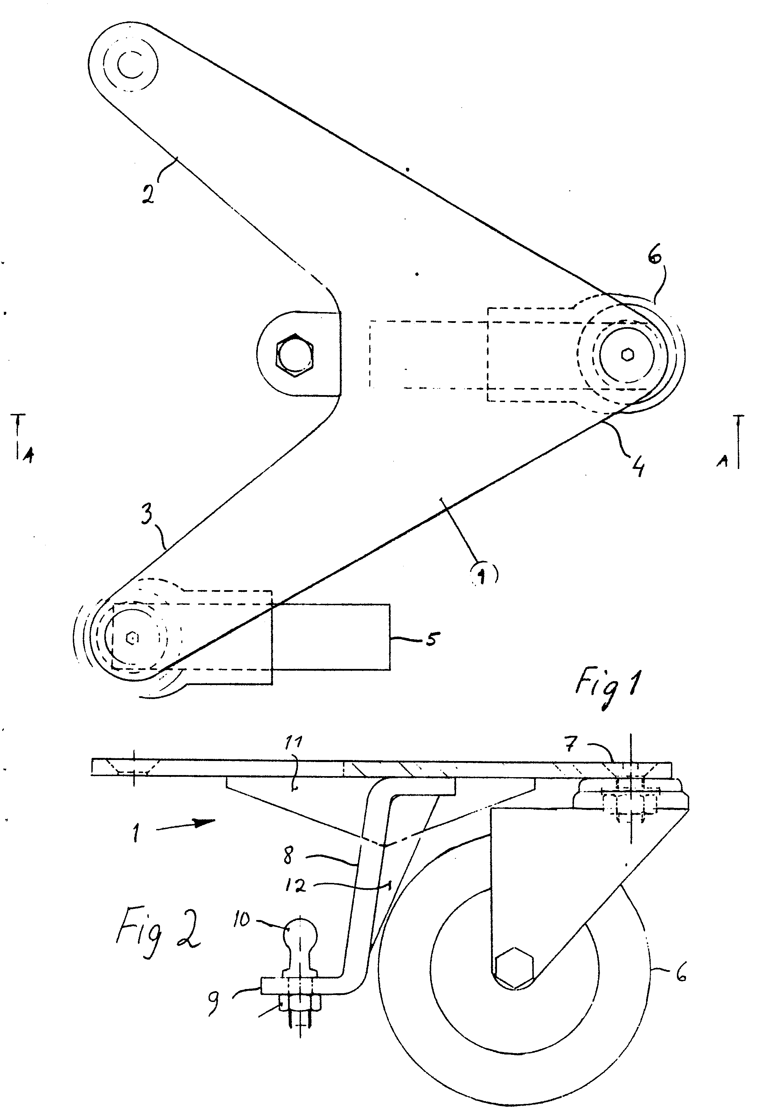

In Fig. 1, there is shown a plan view of the wheel assembly 1 according to the invention. The wheel assembly 1 comprises a plate having three arms 2, 3, 4 extending in a triangular manner and each having a hole at the end thereof. In each hole there is attached a swivel caster 5, 6 (one swivel caster shown removed). Each caster is attached by a screw 7 engaging said hole in the corresponding arm. The axis of the screw is perpendicular to the plane of the corresponding arm. As is conventional, each swivel caster can swivel around said axis.

The swivel caster comprises a wheel attached by a rotation axis perpendicular to said swivel axis. The rotation axis is off-set from the swivel axis as shown in Fig. 2.

At the middle of the plate there is provided a depending arm 8 having a portion thereof extending parallel to the plate but off-set downwards from the plate. The off-set portion 9 comprises a ball 10 of a ball and socket joint, the socket being attached to a vehicle.

Each arm may be reinforced by a triangular brace 11 as shown in Fig. 2 and the depending arm may be reinforced by a triangular brace 12 as shown in Fig. 2. Thus the complete wheel assembly is very stiff and can resist substantial bending forces.

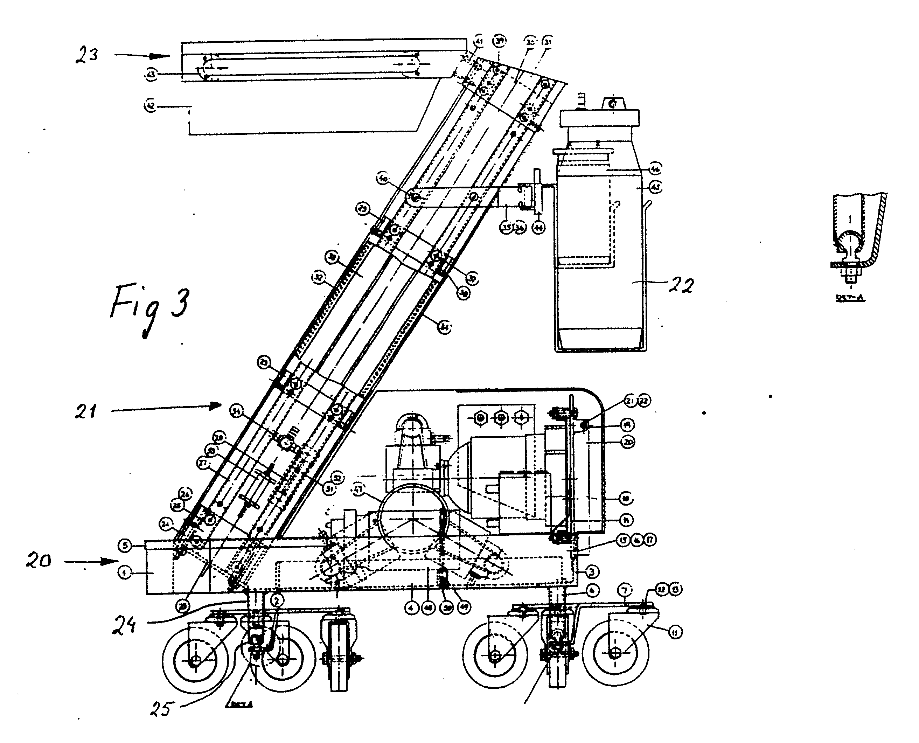

In Fig. 3 there is shown a trolley partially in cross-section. The trolley comprises a horizontal base 20 having four sets of wheel assemblies according to the present invention attached at the four corners thereof. The trolley comprises an inclined pillar 21 supporting an oxygen bottle 22 and a writing table or desk 23. The trolley comprises further equipments which are not described here.

Each wheel assembly according to the invention is attached to the base 20 by a rod 24, the end of which having a socket 25 of said ball and socket joint.

The operation of the wheel assembly according to the invention is now described.

The wheel assembly has three support points to the ground whereby the plate is established parallel to the ground, i. e. usually horizontally. The wheel assembly is intended for indoor operation and thus it is proper to say that the plate is horizontal.

Thus, the swivel axis of each caster is exactly vertical. This is important since a small angle of the axis to the vertical will result in a wobbling of the caster when driven over the floor. This is a well-known problem from other use of casters. If the caster is attached directly to a trolley or similar device and the trolley approaches an obstacle which it cannot pass, then the entire energy of the trolley is transferred to the axis of the caster and very often the axis is distorted or moved from its original vertical orientation. Thus, all subsequent use of this trolley having a distorted caster axis will result in a wobbling of the caster which is very disturbing.

As mentioned above, the plate and the arms thereof are very stiff resulting in that the axis of the casters are maintained vertical even if heavily loaded. Thus, all tendencies of wobbling of the casters have been counteracted by the construction of the wheel assembly. Moreover, if the wheel assembly approaches an obstacle, the wheel assembly will first rotate around the ball and socket joint before it comes to a complete stop, and thus the kinetic energy of the trolley will be distributed over a longer time and will not result in a distortion of the caster.

When one of the casters meets an obstacle, such as a threshold or other obstacle having a great lateral extension, the following procedure happens. The caster first approaching the obstacle stops and the wheel assembly rotates around the ball and socket joint until the next caster approaches the obstacle. Then, the caster having the smallest resistance suddenly passes the obstacle. Thence, when the first caster has reached the other side of the obstacle, the two remaining casters passes the obstacle almost simultaneously. The action resembles a boggie action in that the plate is allowed to pivot around the ball and socket joint to be inclined at the passage of the obstacle. By the boggie action, the base is only affected to a smaller degree by the obstacle.

The ball and socket joint results in another advantage. If the wheel assembly encounters a smaller obstacle, then the caster approaching the obstacle stops and the two remaining casters passes around the obstacle. The stopping of the first caster results in a rotation of the wheel assembly which makes the first caster to move a small amount in the lateral direction. This small lateral movement is usually sufficient for the caster to pass beside the obstacle. Otherwise the first caster is pulled over the obstacle as the last wheel. In this way, a very small influence on the base of the vehicle is achieved.

Another advantage of the present wheel assembly is achieved in the position where it is desired to reverse the movement direction f the trolley. Having ordinary casters not attached to a wheel assembly according to the invention, resultes in that the caster must be reversed. During the reversing movement, the caster must rotate around its contact point with the ground. This results in an eccentric movement of the trolley due to the eccentric attachment of the swivel axis. In the present invention said eccentric movement is absorbed by the plate and the trolley is not affected at all by such eccentric movements of the casters.

Since the wheel assembly has three casters, the support point of the wheel assembly is always inside the support area. Thus, the rotational position of each caster does not affect the stability of the trolley, which has been a problem at the previous use of conventional casters.

As appears from Fig. 2, the ball and socket joint is positioned very low and approximately at the same height over the floor as the rotational axis of the swivel casters. Thus, the wheel assembly has a very low attachment point to the trolley and cannot tilt even if approaching an obstacle which it cannot pass.

Moreover, the ball and socket joint is positioned approximately in the centrum of the area encircled by the attachment points of the casters. Thus, each caster is equal and no caster have a tendency to be the leader. Alternatively, the ball and socket joint can be positioned eccentrically, so that one or two casters always will leed.

The wheel assembly is attached to the vehicle by said ball and socket joint and specifically by a spring washer included in the ball and socket joint. Thus, the wheel assembly is removable from the vehicle by removing or loosening said spring washer.

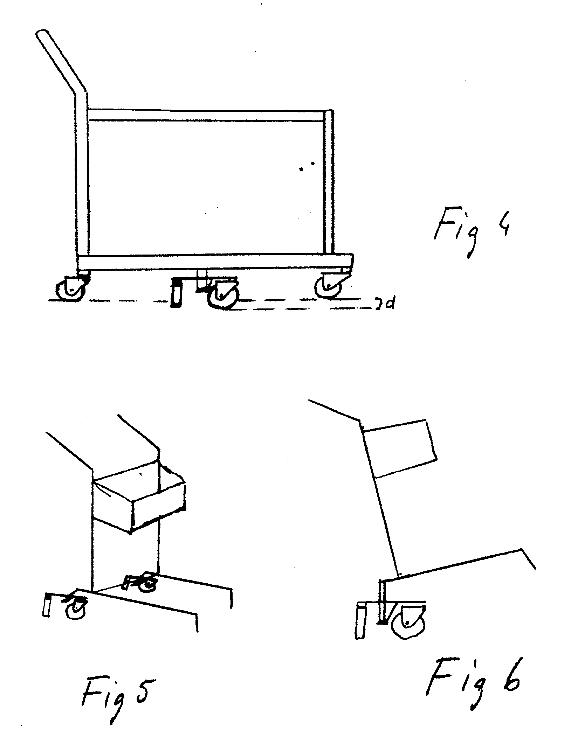

The wheel assembly according to the invention can be used in combination with conventionally mounted swivel casters as shown in Fig. 4. The ordinary casters at the front and the back are off-set a small distance, approximately 10 mm, upwards in relation to the wheel assemblies. The trolley can be driven on the front caster and the two wheel assemblies or the back caster and the wheel assemblies. When the trolley encounters a threshold, the front caster is lifted by tilting the trolley a small amount and the front caster can pass the threshold. Then, the remaining wheel follows without problems.

In Fig.s 5 and 6 there is shown another use of the ball and socket joint. The stand is provided with two wheel assemblies and two support legs. When the stand is to be moved, the stand is tilted to the balance point and driven on the wheel assemblies and then firmly placed on the legs at the end of the transport. The support rods of the wheel assemblies are vertical in the transport position to allow unimpared operation of the wheel assemblies.

The exemplary embodiment shown at the drawings has casters of a diameter of 100 mm and the ball and socket joint is positioned about 40 mm above the floor.

Hereinabove, a preferred embodiment of the wheel assembly according to the invention has been described with reference to the drawings. It is realized that the embodiment can be modified in many respects without departing from the scope of the invention. Thus, the number of casters of the wheel assembly can be any number more than two, e. g. four or more. The invention is only limited by the appended claims.

## Claims

1. A wheel assembly comprising a plate having at least three swivel casters (5, 6) attached thereto, **characterized** by a ball and socket joint (10, 25) for connection to a vehicle to be movable in order to have fridom to rotate and pivot in all directions at least to a limited extent.

2. A wheel assembly according to claim 1, **characterized** in that the plate comprises several arms (2, 3, 4) each comprising a caster and a depending arm (8) comprising the ball and socket joint.

3. A wheel assembly according to anyone of the previous claims, **characterized** in that each arm is reinforced (11, 12).

4. A wheel assembly according to anyone of the previous claims, **characterized** in that the ball and socket joint is positioned approximately in the centrum of the area encircled by the attachment points of the casters.

5. A wheel assembly according to anyone of the previous claims, **characterized** in that two wheel assemblies are attached to a vehicle and the vehicle further comprising two legs.

6. A wheel assembly according to anyone of the previous claims, **characterized** in that two wheel assemblies are attached to a vehicle and the vehicle further comprising front and back casters being off-set upwards in relation to the wheel assemblies.

7. A wheel assembly according to anyone of the previous claims, **characterized** in that the ball and socket joint (10, 25) is positioned at about the same height over the ground as the horizontal pivot axis of each caster.

2

6

4

3

1

5

*Fig 1*

11

7

1

8

12

*Fig 2*

10

9

6

Fig 3

Fig 4

Fig 5

Fig 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A- 912 388 (THE HARVARD MANUFACTURING CO.) * Claim 1; figure 7 * | 1 | B 60 B 33/00 B 62 B 5/00 |
| Y,D | US-A-2 314 129 (W.E. DALEY) * Figures 1-4; pages 1,2, lines 1-28 * | 1 | |
| A | DE-A-2 159 881 (H. ARENSON) * Figures 1-10; page 3, line 18 - page 13, line 8 * | 1 | |
| A,D | US-A-4 178 006 (R.E. JOHNSON) * Figures 1-5; column 2, line 35 - column 5, line 16 * | 1 | |
| A | US-A-4 351 541 (R.L. PROPST) * Figures 1-7; column 2, line 29 - column 3, line 62 * | 1 | TECHNICAL FIELDS SEARCHED (Int. Cl.4) B 60 B B 62 B |

The present search report has been drawn up for all claims

| Place of search | Date of completion of the search | Examiner |
|---|---|---|
| THE HAGUE | 02-11-1987 | VANNESTE M.A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82